# FASCICULE DE BREVET EUROPEEN

(11) **EP 2 020 336 B1**
(45) Date de publication et mention de la délivrance du brevet: **04.07.2012**
(21) Numéro de dépôt: 08161141.0
(22) Date de dépôt: 25.07.2008
(51) Int. Cl.: B60Q 1/12

(54) **Dispositif de montage d'un module optique dans un projecteur pour véhicule automobile**
Vorrichtung zur Montage eines optischen Moduls in einen Kraftfahrzeugscheinwerfer
Device for installing an optical module in an automobile headlight

(30) Priorité: 03.08.2007 FR 0705716
(43) Date de publication de la demande: 04.02.2009
(73) Titulaire: Valeo Vision, 93012 Bobigny Cedex (FR)
(72) Inventeur: Blandin, Jonathan, 93320 Les Pavillons sous Bois (FR); Arlon, Philippe, 77330 Ozoir la Ferrière (FR); Bon, Olivier, 75019 Paris (FR); Dorn, David, 93420 Villepinte (FR); Letoumelin, Rémy, 77000 Chessy (FR); Louviot, Hervé, 93500 Pantin (FR); Natchoo, Philippe, 77680 Roissy en Brie (FR); Soleilhavoup, Daniel, 77290 Mitry Mory (FR)

(56) Documents cités:
- EP-A- 1 285 812
- EP-A- 1 431 118
- EP-A- 1 762 774
- EP-A- 1 772 666
- FR-A- 2 797 678

## Description

L'invention est du domaine des projecteurs pour véhicule automobile, et plus particulièrement des modalités d'installation en pivotement d'un module optique à l'intérieur du projecteur. Elle a pour objet un tel projecteur dans lequel le module optique est plus particulièrement du type à feux de croisement et est apte à pivoter selon la trajectoire suivie par le véhicule, notamment en cas de prise d'un virage pour obtenir une fonction dite « code virage » (appelée aussi DBL pour « Dynamic Bending Light » en anglais).

Un projecteur pour véhicule automobile comprend généralement un boîtier sur lequel est monté un châssis porteur d'un module optique générateur d'un faisceau lumineux, fermé par une glace transparente (laissant passer substantiellement la lumière) pour la sortie du faisceau lumineux. Ce module optique comprend un support d'une source lumineuse et des moyens de formation d'un faisceau lumineux à partir de la lumière produite par la source lumineuse. La source lumineuse peut être une lampe à décharge, une lampe halogène ou une diode électroluminescente (appelée aussi LED pour « Light Emiting Diode » en anglais) par exemple. Les moyens de formation du faisceau lumineux comprennent habituellement un système optique porté par le support. Un tel système optique est du type comprenant un ou plusieurs éléments optiques associés, tel que réflecteur et/ou élément dioptrique du type lentille, lentille de Fresnel notamment, et/ou élément collimateur de lumière par exemple.

Un exemple de module optique est un module dit elliptique : dans ce type de module, une tache de concentration lumineuse est engendrée par une source lumineuse disposée dans un miroir, ou réflecteur. Typiquement, la source lumineuse est disposée au premier foyer, ou foyer objet, d'un miroir en forme d'ellipsoïde, ladite tache se formant au second foyer, ou foyer image, du miroir. La tache de concentration lumineuse est ensuite projetée sur la route par une lentille convergente, par exemple une lentille de type plan-convexe. Pour obtenir un faisceau à coupure, on insère, de façon connue, un cache au niveau du foyer de la lentille.

Le module optique est aussi muni d'une connectique de raccordement de la source lumineuse à la source d'énergie électrique du véhicule. Le fonctionnement de la source lumineuse peut aussi être piloté par des moyens électroniques de commande, qui peuvent être localisés dans un quelconque endroit du véhicule ou être intégrés au projecteur.

Se pose le problème de l'éclairage de la voie lorsque le véhicule aborde un virage. Ce problème concerne plus particulièrement les projecteurs équipés d'un module optique dédié à la projection d'un feu de croisement, ou code, ou autres projecteurs à coupure analogue. De tels projecteurs à coupure sont organisés de manière à ne pas éblouir le conducteur d'un véhicule croisé. En cas de prise d'un virage, il est utile d'éclairer la voie en projetant un faisceau lumineux dans la direction du virage emprunté par le véhicule.

Une solution consiste à monter le module optique de manière pivotante sur le châssis (appelé aussi platine) du projecteur, autour d'un axe de pivot orienté orthogonalement à l'axe du faisceau lumineux produit par le module optique. Cet axe de pivot est notamment orienté sensiblement suivant la verticale au regard du plan de repos du véhicule au sol. Un tel montage pivotant de le module optique permet de réaliser une fonction dite « code virage » ou fonction DBL (Dynamic Bending Light en anglais). Le module optique est mobile en pivotement de part et d'autre d'une position médiane dans laquelle l'axe d'émission du faisceau lumineux est en correspondance avec l'axe général médian (longitudinal) du véhicule. Un pivotement du module optique par rapport à sa position médiane permet de modifier l'orientation du faisceau lumineux produit par le module optique selon la trajectoire du véhicule, lors d'une prise de virage notamment. Le montage pivotant du module optique est réalisé par l'intermédiaire de son support, qui est articulé sur le châssis et qui est placé en zone longitudinalement médiane du module optique de manière à répartir au mieux le poids de ce dernier de part et d'autre du support. L'extension longitudinale du module optique correspond à l'orientation du faisceau lumineux qu'il produit. Le châssis est agencé en cadre ménageant un couple de paliers d'articulation opposés qui sont répartis de part et d'autre du support suivant son axe d'articulation. Un actionneur porté par le châssis permet d'entraîner le support en pivotement en fonction d'informations de commande en provenance du véhicule, capteur d'angle volant par exemple. Des moyens de transmission sont interposés entre l'actionneur et le support pour leur mise en relation l'un à l'autre.

Les organes fonctionnels du projecteur sont réputés inesthétiques, et des masques sont interposés entre la glace transparente et ces organes fonctionnels, tel que le châssis, le module optique, les éléments de connectique, et ses moyens de mobilité en pivotement. Les masques sont agencés et disposés entre eux pour habiller les faces internes du projecteur qui sont visuellement accessibles à travers la glace transparente. Ces masques associent notamment au moins un masque mobile porté par le module optique, et au moins un masque fixe porté par le boîtier du projecteur. Une fenêtre est ménagée dans le masque fixe pour autoriser le passage du faisceau lumineux depuis le module optique vers la paroi transparente. Les masques s'étendent entre l'arrière du projecteur et sa face avant munie de la glace transparente, pour ne laisser apparaître que l'espace réservé à la sortie du faisceau lumineux hors du projecteur.

Le problème posé pour le montage pivotant du module optique sur le châssis réside dans un compromis satisfaisant à trouver au regard de plusieurs contraintes. Le module optique doit être maintenu de manière fiable et précise à l'intérieur du projecteur, en prenant notamment en compte son poids et son extension axiale.

On recherche aussi une faculté de mobilité en pivotement du module optique avec un débattement angulaire optimisé, par l'intermédiaire de moyens simples et peu coûteux. Cependant, une optimisation de ce débattement angulaire induit un jeu nécessaire entre le masque fixe et le masque mobile qui est inesthétique et ne favorise pas la compacité de l'ensemble. Il est fréquent d'avoir à interposer des masques intermédiaires, ce qui n'est pas souhaitable en raison de la complexité et des coûts induits du projecteur. D'une manière générale, la mobilité en pivotement du module optique rend difficile l'installation des masques et un compromis doit être trouvé entre une optimisation du débattement angulaire du module optique et l'implantation de masques ménageant entre eux un jeu réduit.

L'organisation des moyens fonctionnels du projecteur, et notamment les modalités de montage et de manoeuvre optimisée en pivotement du module optique sur le châssis, doivent être obtenues avec un encombrement le plus restreint possible. L'agencement des moyens utilisés pour le montage pivotant du module optique doit faciliter le masquage des organes fonctionnels réputés inesthétiques du projecteur, et offrir aux concepteurs une liberté de mise en conformation du projecteur au regard de son aspect extérieur et de l'effet visuel qu'il procure au véhicule.

Les modalités de montage en pivotement du module optique sur le châssis doivent prendre en compte le comportement du projecteur en cas de « choc piéton » (On entend par « choc piéton » la possibilité que le projecteur absorbe au mieux un impact lors d'une collision avec un piéton, afin de limiter ses dommages corporels, une réglementation européenne a récemment été établie à ce sujet), et plus particulièrement doivent autoriser un escamotage aisé du module optique sans affecter la qualité et la précision de son maintien en position fonctionnelle.

La présente invention a pour objet un projecteur de véhicule automobile qui est agencé pour recevoir de manière pivotante un module optique producteur d'un faisceau lumineux, pour conférer au projecteur la fonction dite « code virage ». Plus particulièrement, un but de la présente invention est de proposer un dispositif de montage du module optique sur un châssis du projecteur, dont l'organisation procure un compromis satisfaisant au regard des contraintes qui ont été énoncées. Il est aussi visé par la présente invention de proposer un projecteur lumineux dont l'agencement global exploite au mieux les avantages que procure ce dispositif de montage dont il est équipé.

L'objet de la présente invention est un projecteur pour véhicule automobile équipé d'un module optique comprenant un support porteur d'une source lumineuse et d'un système optique pour l'émission d'un faisceau lumineux, le module optique étant monté mobile sur le projecteur autour d'un axe de pivot par l'intermédiaire de moyens de mobilité qui associent des moyens de montage pivotant du support sur un châssis du projecteur utilisant un actionneur en relation avec un organe d'entraînement en prise sur le support. Les moyens de montage pivotant du support comprennent un socle de soutien du module optique qui ménage une assise sur laquelle repose le support et qui est muni d'un palier unique d'articulation du support sur le châssis.

L'invention concerne ainsi un projecteur pour véhicule automobile équipé d'un module optique comprenant un support porteur d'une source lumineuse et d'un système optique pour l'émission d'un faisceau lumineux, le module optique étant monté mobile sur le projecteur autour d'un axe de pivot par l'intermédiaire de moyens de mobilité qui associent des moyens de montage pivotant du support sur un châssis du projecteur utilisant un actionneur en relation avec au moins un organe d'entraînement en prise sur le support, les moyens de montage pivotant du support (6) comprenant un palier unique d'articulation
- situé en dessous et supportant le module optique
- reprenant les efforts, notamment axiaux et radiaux, dus au module optique et ainsi séparant le ou les organes d'entraînement des chaînes d'efforts.

Le montage mobile du module optique est apte à conférer au projecteur une fonction dite « code virage », qui consiste à provoquer un pivotement du module optique autour de son axe de pivot en fonction de la trajectoire suivie par le véhicule, et plus particulièrement lorsque le véhicule aborde un virage. L'axe de pivot est orienté transversalement à l'axe optique du faisceau lumineux, et plus particulièrement sensiblement orthogonalement à un plan correspondant au plan de repos du véhicule au sol lorsque le projecteur est installé sur ce véhicule. Le pivotement du module optique est plus particulièrement réalisé à partir de son débattement angulaire autour de l'axe de pivot, de part et d'autre d'une position médiane de repos correspondante à une trajectoire du véhicule induite par une mise en parallèle de ses roues directrices ou encore correspondante à l'axe général longitudinalement médian du véhicule. La mise en oeuvre de l'actionneur est notamment provoquée par des moyens de commande intégrant des moyens de détection de la prise d'un virage par le véhicule.

Le module optique constitue un module apte à émettre au moins un faisceau lumineux, qui est installé à l'intérieur du projecteur. Plus particulièrement, le projecteur comprend un boîtier pour la réception du module optique, ce boîtier étant muni du châssis qui est porteur au moins du support par l'intermédiaire dudit palier d'articulation, voire aussi de l'actionneur et de l'organe d'entraînement qui lui est associé et qui est en prise sur le support pour provoquer le pivotement du module optique. Le module optique est susceptible de comprendre une ou plusieurs sources lumineuses, et un ou plusieurs systèmes optiques affectés à au moins l'une de ces sources lumineuses. Le système optique comporte un ou plusieurs éléments optiques pour émettre un ou plusieurs faisceaux lumineux qui sont dirigés vers une glace transparente équipant le projecteur à l'avant. De tels éléments optiques sont par exemple l'un quelconque au moins d'un réflecteur et/ou d'un élément dioptrique du type lentille, lentille de Fresnel notamment, et/ou d'un élément collimateur de lumière par exemple. De tels éléments optiques sont choisis selon le type de la source lumineuse dont est muni le module optique et à laquelle ils sont associés.

Le boîtier comporte une face avant munie d'une glace transparente pour le passage du faisceau lumineux à son travers, et loge un ou plusieurs masques disposés à l'intérieur du boîtier. Ce ou ces masques délimitent en regard sur la paroi transparente les bords d'une fenêtre de passage du faisceau lumineux vers cette paroi transparente. Ces masques forment des obstacles visuels pour un observateur depuis l'extérieur du projecteur à travers la glace transparente, et sont aptes à rendre invisibles les organes fonctionnels du projecteur pour un tel observateur. Les organes fonctionnels du projecteur sont compris comme étant les organes réputés inesthétiques et utiles à son fonctionnement, à savoir l'ensemble des organes logés par le boîtier du projecteur exceptés au moins les masques eux-mêmes et la glace transparente.

L'actionneur est apte à manoeuvrer le module constituant le module optique par l'intermédiaire du support. Ce support est un organe qui est placé en interposition entre les organes fonctionnels du module optique et le châssis. Les appareils fonctionnels du module optique sont compris comme étant ceux utiles à l'émission d'au moins un faisceau lumineux, source lumineuse et système optique notamment. L'actionneur et le support sont en relation par l'intermédiaire d'un système de transmission comprenant l'organe de transmission, voire aussi des organes intermédiaires de transmission interposés entre l'actionneur et l'organe de transmission en prise sur le support.

Selon la présente invention, il est proposé un choix consistant à articuler le support sur un soubassement du module optique sur lequel ce dernier repose par l'intermédiaire d'un palier unique d'articulation. Plus particulièrement, le projecteur est principalement reconnaissable en ce que les moyens de montage pivotant du support comprennent essentiellement un socle de soutien du module optique. Ce socle ménage une assise sur laquelle repose le support et est muni d'un palier unique d'articulation du support sur le châssis. Ce palier unique d'articulation est apte à lui seul à guider le module optique en pivotement à partir d'une mobilité du support soutenu par le socle.

Le palier d'articulation est composé d'un organe d'articulation mâle et d'un organe d'articulation femelle coopérants qui sont affectés au support et au châssis. L'organe d'articulation affecté au châssis est coopérant avec l'organe d'articulation affecté au support, ces organes d'articulation étant indifféremment respectivement mâle ou femelle. L'organe d'articulation femelle est notamment agencé en cage de réception d'un doigt, voire d'une sphère, constitutif de l'organe d'articulation mâle. Le palier d'articulation est dans sa généralité agencé en organes emboîtés qui sont respectivement affectés au support et au châssis, pour être aptes à procurer un guidage en mobilité du support sur le châssis provoquant un pivotement du module optique autour de l'axe de pivot.

Selon diverses variantes de réalisation, l'axe du palier d'articulation est au moins parallèle à l'axe de pivot du module optique en étant excentré par rapport à cet axe de pivot, ou est coaxial à cet axe de pivot. Cette dernière solution présente l'avantage de simplifier l'organisation du socle et les modalités de mise en relation entre le support et l'actionneur.

Le socle forme un soubassement pour le module optique qu'il soutient par l'intermédiaire de l'assise et qu'il guide en pivotement par l'intermédiaire du palier d'articulation unique, à l'exclusion de tout autre palier d'articulation. Une telle organisation des moyens de montage pivotant du module optique est apte à dégager au mieux son environnement proche.

Ces dispositions sont telles que les moyens de montage pivotant du support sur le châssis sont exempts d'organes placés autour du module optique à l'exception de sa base de repos naturelle lorsque le projecteur est installé sur un véhicule. Plus particulièrement, la zone supérieure du module optique, opposée à sa zone inférieure reposant sur le socle, est apte à être dégagée de tout organe fonctionnel susceptible d'être interposé entre le module optique et au moins un masque du projecteur.

Les moyens de montage sont structurellement simples et globalement réduits au socle associant l'assise et le palier unique d'articulation dont il est muni. Les moyens de mobilité en pivotement du module optique sont obtenus à moindre coût et avec un encombrement réduit. En outre, le châssis réduit au socle est facilement implantable à l'intérieur du projecteur suivant un quelconque agencement, en étant logé dans sa zone inférieure qui peut être aisément masquée. Un tel châssis peut être implanté en s'étendant globalement dans un plan suivant une orientation quelconque, et notamment suivant une orientation différente de celle d'un plan orthogonal à l'axe optique du module optique. Une telle liberté d'orientation n'affecte pas l'obtention d'un débattement angulaire approprié et optimisé du module optique, avec pour avantage de pouvoir obtenir de manière cumulée la fonction « code classique » et la fonction « code virage » à partir d'une même source lumineuse et d'un même module optique. Le châssis est susceptible d'être plus ou moins incliné par rapport à l'axe général de progression du véhicule, pour faciliter son implantation en fonction d'une quelconque conformation de la glace transparente : il peut ainsi épouser ou se rapprocher de la courbure de la glace pour un meilleur effet visuel.

Plus particulièrement, le projecteur est muni d'un module optique monté pivotant sur le socle selon un débattement angulaire apte à procurer à partir de ce même module optique la fonction « code classique » et la fonction « code virage ». La fonction « code classique » correspond à une orientation du module optique procurant une émission du faisceau lumineux suivant un axe optique parallèle à l'axe médian du véhicule (son axe longitudinal) ou en d'autres termes à son axe général de progression en ligne droite.

La faculté de pivotement du module optique est améliorée grâce à l'invention. Le montage en pivotement du support à partir du socle, voire aussi l'invisibilité des jeux entre masque fixe et masque mobile, permet d'améliorer le débattement angulaire en pivotement du module optique par rapport à sa position médiane sur le châssis. Ce débattement angulaire est apte à atteindre 60°, en étant préférentiellement limité à 45° pour faciliter les modalités d'installation et de conformation des masques. La possibilité d'un large débattement en pivotement du module optique (et qui n'est pas obtenu au détriment de la compacité) permet de rendre la source lumineuse apte à elle seule à éclairer la voie en cas de prise de virage par le véhicule pour obtenir ladite fonction « code virage ». Cette propriété permet notamment de dispenser le véhicule d'avoir à être équipé d'une source lumineuse additionnelle au module optique et activable conjointement à sa source lumineuse ou spécifiquement pour l'obtention de ladite fonction « code virage ».

Les modalités proposées d'organisation des moyens de mobilité du module optique permettent de diminuer l'effort de résistance opposé par le module optique en cas de « choc piéton », en facilitant la déformation du projecteur. Plus particulièrement, le montage du module optique à partir d'un socle facilite son escamotage par flexion dans la zone du palier d'articulation en cas de « choc piéton ». Cette capacité d'escamotage du module optique est obtenue sans altérer la fiabilité et la précision du maintien et de la mobilité en pivotement du module optique à l'intérieur du projecteur. On a en fait deux effets bénéfiques au « choc piéton », à savoir l'agencement relatif des pièces du module, et la forme même desdites pièces, qui concourent à augmenter sa capacité à se déformer sous un choc.

Le module optique est notamment disposé au dessus, notamment en porte-à-faux ou en surplomb, du châssis, qui est formé d'une ossature munie du socle à son sommet. La zone de surplomb du châssis est celle qui est située au dessus du châssis en position d'installation du projecteur sur un véhicule. La notion de surplomb ne préjuge pas de l'extension du module optique dans cette zone située au-dessus du châssis, le module optique pouvant ou non déborder de l'aplomb du châssis.

L'ossature comporte, est par exemple constituée d'une platine, ou encore d'une armature du type composée de poutres reliées entre elles. Une telle armature comprend, est de préférence constituée de, une pièce unitaire qui peut être aisément obtenue par moulage et/ou surmoulage d'une ou de plusieurs matières plastiques. L'ossature est munie de moyens de fixation sur un boîtier du projecteur et de moyens de réception de l'actionneur constitutif des moyens de mobilité du module optique.

L'axe d'articulation du palier est indifféremment coaxial ou parallèlement excentré par rapport à l'axe de pivot du module optique.

Selon une forme de réalisation dans laquelle l'axe d'articulation du palier est coaxial à l'axe de pivot du module optique, le châssis, qui est avantageusement formé d'une ossature, s'étend selon un plan contenant l'axe de pivot.

Selon diverses variantes de réalisation, le châssis peut être un châssis global exploité pour un ou plusieurs modules optiques affectés à des fonctions qui leurs sont dédiés. Le châssis peut aussi être un châssis intermédiaire qui est porté par un tel châssis global, le cas échéant par l'intermédiaire de moyens de mobilité.

Si on choisit de porter le module de l'invention par un châssis intermédiaire, on peut alors lui affecter un correcteur dédié (dynamique ou statique), correcteur que l'on peut utiliser, bien sûr, en premier lieu pour opérer le réglage d'assiette du module, mais aussi pour décaler volontairement le faisceau, par exemple pour obtenir avec le même module un faisceau surélevé par rapport à un code du type faisceau d'autoroute (connu sous le terme anglais de faisceau « Motorway ») : on utilise alors plutôt un correcteur de type dynamique.

Si on choisit de porter le module selon l'invention par un châssis commun à plusieurs modules, dans ce cas on a recours à un correcteur commun à tous les modules portés par le châssis.

A noter que l'on peut utiliser le terme « platine » indifféremment à la place de « châssis » dans tout le présent texte.

Le socle comporte un passage pour l'organe d'entraînement qui est coaxial à l'axe du palier d'articulation. L'organe d'entraînement est constitutif du palier d'articulation et est manoeuvrable en rotation sur lui-même par l'actionneur.

L'organe d'entraînement est constitutif du palier d'articulation en ce qu'il forme l'un des organes d'articulation qui le compose. L'organe d'entraînement est indifféremment un organe femelle et/ou un organe mâle, qui est en prise sur le support par l'intermédiaire de l'organe d'articulation de forme complémentaire affecté au support. Les modalités de prise de l'organe d'entraînement sur le support indiffèrent dès lors que cette prise est apte à transmettre au support le mouvement tournant sur lui-même de l'organe d'entraînement. L'organe d'entraînement et le support sont par exemple liés l'un à l'autre en rotation indifféremment par emmanchement, par scellement, par brochage, par clavetage, par cannelage ou autre technique d'assemblage en rotation analogue.

Il est préféré la solution avantageuse consistant à monter l'actionneur sur le châssis et à mettre en prise son arbre de sortie avec le support. Ces dispositions permettent d'améliorer la réduction de l'encombrement des moyens de montage en pivotement du module optique sur le châssis.

Plus particulièrement, l'organe d'entraînement comprend, est de préférence constitué par, un arbre de sortie de l'actionneur.

L'arbre de sortie est susceptible d'être orienté suivant un axe différent de celui du mouvement généré par l'organe moteur que comprend l'actionneur. L'actionneur comprend, est plus particulièrement constitué de, un module indépendant rapportable en soi sur le châssis. Un tel module est susceptible d'intégrer non seulement l'organe moteur générateur du mouvement de l'arbre de sortie de l'actionneur, mais aussi des moyens de renvoi de ce mouvement vers le dit arbre de sortie pour provoquer sa rotation sur lui-même. L'actionneur est avantageusement rapporté sur le châssis latéralement par rapport à l'extension axiale de l'arbre de sortie. Cet apport de l'actionneur est par exemple réalisé par clippage ou technique analogue de mise en coopération d'organes d'emboîtement que comportent respectivement le châssis et l'actionneur. D'autres techniques d'apport sont envisageables, notamment des techniques mettant en oeuvre des organes spécifiques d'assemblage ou mettant en oeuvre un scellement entre le châssis et l'actionneur.

Selon une forme de réalisation dans laquelle l'axe d'articulation du palier est excentré par rapport à l'axe de pivot du module optique, l'organe d'entraînement comprend, notamment est constitué de, un organe cranté, tel que roue, crémaillère ou organe cranté analogue, qui coopère avec les ailettes d'un échangeur thermique que comporte le module optique.

L'aptitude des moyens de montage à mettre en oeuvre un axe d'articulation du support excentré par rapport à l'axe de pivot du module optique est révélatrice du résultat général que procure l'invention sur la liberté d'agencement et d'implantation du palier d'articulation unique et du châssis organisé en socle.

L'échangeur thermique peut être un organe du type comportant des ailettes ou éléments analogues aptes à optimiser la surface d'échange thermique entre le module optique et l'air ambiant. Un tel échangeur thermique est utilisé pour le refroidissement du module optique, en conséquence de la chaleur notamment produite par la source lumineuse.

La source lumineuse peut être choisie parmi les diodes électroluminescentes (LED), les lampe à décharge appelées aussi lampes xénon, ou les lampes halogène, voire toute autre type de source lumineuse apte à l'obtention d'un faisceau lumineux adapté pour l'éclairage de la voie ou pour la signalisation du véhicule.

Il est cependant préféré d'exploiter une source lumineuse du type diode électroluminescente (LED), qui présente l'avantage d'obtenir un module optique de faible poids et d'extension axiale réduite suivant l'axe optique du faisceau lumineux produit et renvoyé vers la paroi transparente. Le choix d'utiliser une telle source lumineuse permet notamment d'alléger le module optique et de permettre son soutien par le socle sans affecter la précision de sa mobilité en pivotement, malgré son articulation sur le châssis à partir d'un palier unique placé à sa base.

Plus particulièrement, la source lumineuse est du type diode électroluminescente (LED). Dans ce cas, le support comporte avantageusement un corps porteur ayant:
- dans sa zone avant d'au moins une diode électroluminescente constitutive de la source lumineuse, et d'un élément monobloc constitutif du système optique affecté à la diode électroluminescente (LED),
- dans une quelconque autre de ses zones, de moyens de refroidissement de la chaleur produite par la source lumineuse, voire aussi la connectique de raccordement du module optique à la source d'énergie du véhicule. De tels moyens de refroidissement associent par exemple un échangeur thermique (dit aussi radiateur) et un ventilateur, ou encore sont du type exploitant un fluide caloporteur réfrigéré.

Ladite autre des zones du corps est notamment sa zone arrière pour équilibrer au mieux le soutien du support dans sa zone médiane. Les zones avant et arrière sont les zones du support qui sont réparties de part et d'autre de l'axe du palier d'articulation et plus particulièrement de l'axe de pivot du module optique. La zone avant correspond à la zone du support comprise entre ledit axe de pivot et la paroi transparente du projecteur. Cette zone avant peut être aisément masquée par un masque frontal monté mobile sur le module optique en étant porté par le support de manière à ne laisser apparaître qu'un réflecteur terminal du système optique.

De préférence, une pièce de frottement axial est interposée entre le support et le socle. Cette pièce de frottement axial est constitutive du palier d'articulation et est apte à soulager le socle des conséquences induites par l'appui que prend le module optique sur l'assise. Une telle pièce de frottement axial est par exemple constituée d'une pièce d'usure ou d'une pièce munie d'organes de roulement, telle qu'une butée à aiguilles ou analogue. De telles pièces sont par exemple formées par l'épaulement d'une bague d'interposition enfilée à l'intérieur du passage que comporte le socle pour la réception de l'organe d'entraînement, et plus particulièrement de l'arbre de sortie de l'actionneur.

L'extension et l'encombrement des moyens de montage sont indifférents pour l'organisation de la zone supérieure du projecteur située en surplomb du module optique, et notamment pour l'installation d'au moins un masque formant un obstacle visuel à la zone supérieure du module optique. Cette zone étant dégagée, l'installation d'au moins un masque supérieur dans cette zone est facilitée et le nombre de masques nécessaires peut être facilement réduit. Notamment, la présence de masques annexes d'interposition entre le ou les masques mobiles et le ou les masques fixes est rendue inutile pour réduire les jeux ou tout au moins leur apparence.

Plus particulièrement, le projecteur comporte au moins un masque mobile qui est porté par le module optique avec lequel il se déplace. Ce masque mobile est susceptible de comprendre, isolément ou en combinaison, un ou plusieurs masques mobiles supérieurs et un ou plusieurs masques mobiles inférieurs.

Au moins un masque mobile peut être installé sur le module optique et être associé à au moins un masque fixe porté par le boîtier du projecteur. Le jeu entre le masque mobile et le masque fixe nécessaire à la mobilité en pivotement du module optique peut être rendu invisible pour un observateur, en plaçant le bord correspondant du masque fixe dans un recoin arrière du masque mobile, et ceci sans accroître l'encombrement du module optique porteur du ou des masques mobiles. L'invisibilité des jeux entre masque mobile et masque fixe peut être obtenue y compris dans le cas où la glace transparente est fortement galbée au regard du plan de repos du véhicule au sol lorsque le projecteur est installé sur ce dernier. Un effet esthétique particulier peut aisément être conféré au projecteur à partir de cette invisibilité de jeux entre le ou les masques fixes et le ou les masques mobiles. Cet effet esthétique peut résulter d'un aspect mouvant du module optique muni du masque mobile, sans que ne soient visibles au moins en partie les jeux entre ce masque mobile et le masque fixe associé. Le masque mobile peut en outre être librement conformé, notamment dans la zone supérieure dégagée du module optique.

Par exemple, le projecteur est avantageusement équipé d'au moins un masque mobile comprenant, isolément ou en combinaison :
- un masque supérieur mobile qui ménage un recoin arrière de réception du bord d'un masque supérieur fixe porté par un boîtier du projecteur. Ce recoin arrière est disposé dans une zone du module optique invisible par un observateur depuis l'extérieur du projecteur à travers la paroi transparente. Les jeux nécessaires à la mobilité du module optique entre le masque supérieur mobile et le masque supérieur fixe sont invisibles pour cet observateur.
- un masque inférieur mobile qui s'étend sensiblement orthogonalement à l'axe optique du faisceau lumineux et qui coopère de préférence avec un masque inférieur fixe. Ce masque inférieur fixe est porté par un boîtier du projecteur et est orienté sensiblement orthogonalement au masque inférieur mobile.

Le masque supérieur mobile forme une enveloppe couvrant la partie supérieure du module optique opposée à sa zone de soutien par le socle, et couvrant préférentiellement ses parties latérales vers le socle. Le masque inférieur mobile est placé à l'avant du module optique en s'étendant latéralement pour former une enveloppe couvrant le support, voire aussi au moins partiellement le socle. Le masque inférieur mobile est de conformation courbe et le masque inférieur fixe comporte une fenêtre présentant une conformation courbe homothétique. Le centre de courbure de ces conformations courbe est placé sur l'axe de pivot du module optique, avec pour avantage de permettre de réduire au mieux le jeu entre le masque inférieur mobile et le masque inférieur fixe.

Les différents masques (supérieur, inférieur ou même latéral) peuvent être des composants séparés ou être faits d'une seule pièce.La présente invention sera mieux comprise à la lecture de la description qui va en être faite d'exemples de réalisation non limitatifs, en relation avec les figures des planches annexées, dans lesquelles :
- Les fig.1 à fig.3 sont des illustrations en perspective de différentes variantes respectives de réalisation d'un dispositif de montage selon la présente invention.
- Les fig.4 et fig.5 sont des illustrations en coupe axiale des dispositifs de montage respectivement représentés sur les fig.1 et fig.2.
- La fig.6 est une illustration en perspective d'un châssis constitutif d'un dispositif de montage de la présente invention
- Les figures 7 et 8 illustrent une autre variante selon l'invention.

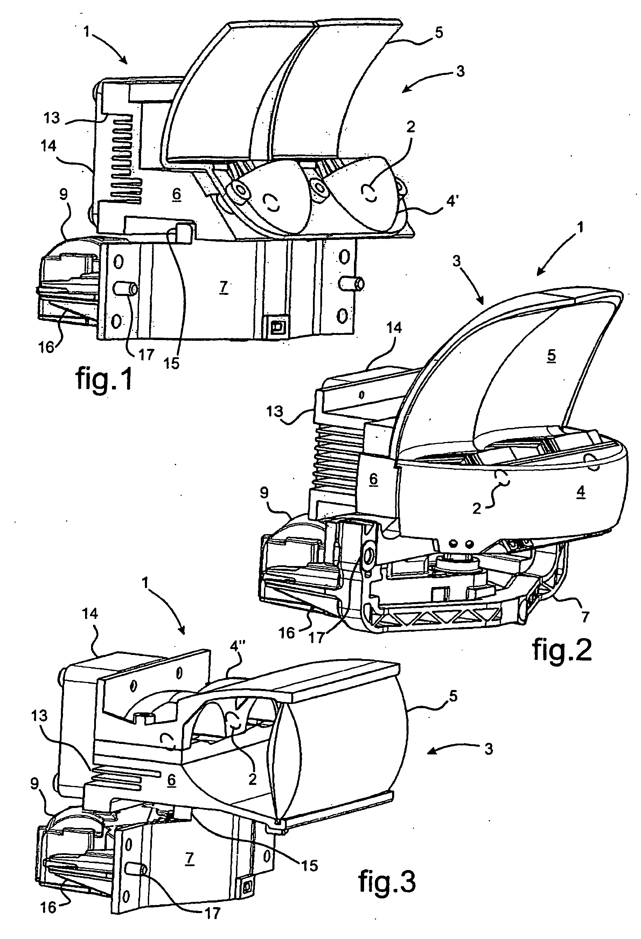

Sur les figures 1 à 6, un dispositif de montage articulé d'un module optique 1 est destiné à équiper un projecteur pour véhicule automobile. Le module optique 1 est principalement composé d'au moins une source lumineuse 2 constituée d'une ou de plusieurs diodes électroluminescentes (LED), et d'un système optique 3 associant des réflecteurs 4,4',4",5 affectés à la source lumineuse 2. Le montage articulé du module optique 1 autour d'un axe de pivot A1 est destiné à conférer au projecteur la fonction dite « code virage ». Ce montage articulé est réalisé à partir d'un support 6 que comprend le module optique, qui est monté mobile en pivotement sur un châssis 7 du projecteur autour d'un axe d'articulation A2 formé par un palier unique 8. Le support 6 est manoeuvrable en pivotement au moyen d'un actionneur 9. Pour des raisons pratiques d'assemblage, l'axe 10, 11, 12 peut être constitué de 2 éléments distincts, comme représenté sur la figure X, l'un, l'organe d'articulation 11 côté palier 8 et l'autre l'arbre de sortie 10 faisant partie de l'actionneur 9, l'organe de transmission 12 servant à transmettre le mouvement au module optique 1. Le palier d'articulation 8 permet de reprendre les efforts axial et radial dus au module optique 1 et ainsi séparer les organes d'entraînement des chaînes d'efforts. Par conséquent le palier 8 associé socle 15 d'un châssis 7 supporte le poids du module optique 1 et ses efforts associés, et un actionneur 9 génère uniquement un mouvement de rotation. De ce fait, l'actionneur 9 a besoin d'un effort minime pour faire pivoter le support 6. Le support 6 est situé en zone longitudinalement médiane du module optique 1 suivant l'axe optique A3 du faisceau lumineux produit. Le support 6 est porteur dans sa zone avant de la source lumineuse 2 et d'un élément monobloc constitutif du système optique 3, et dans sa zone arrière de moyens de refroidissement de la chaleur produite par la source lumineuse 2. Sur l'exemple de réalisation illustré, ces moyens de refroidissement associent un échangeur thermique 13 à ailettes et un ventilateur 14. Il est néanmoins possible d'exploiter d'autres types de moyens de refroidissement, notamment par circulation de fluide réfrigérant refroidi.

Le module optique 1 est monté pivotant sur le châssis 7 autour d'un axe de pivot A1, qui est coaxial à l'axe d'articulation A2 du palier unique par l'intermédiaire duquel le support 6 est articulé sur le châssis 7. Le module optique 1 est disposé en surplomb du châssis 7, de sorte que le châssis 7 forme un soubassement de soutien du module optique 1 et que la partie supérieure opposée du module optique 1 soit dégagée.

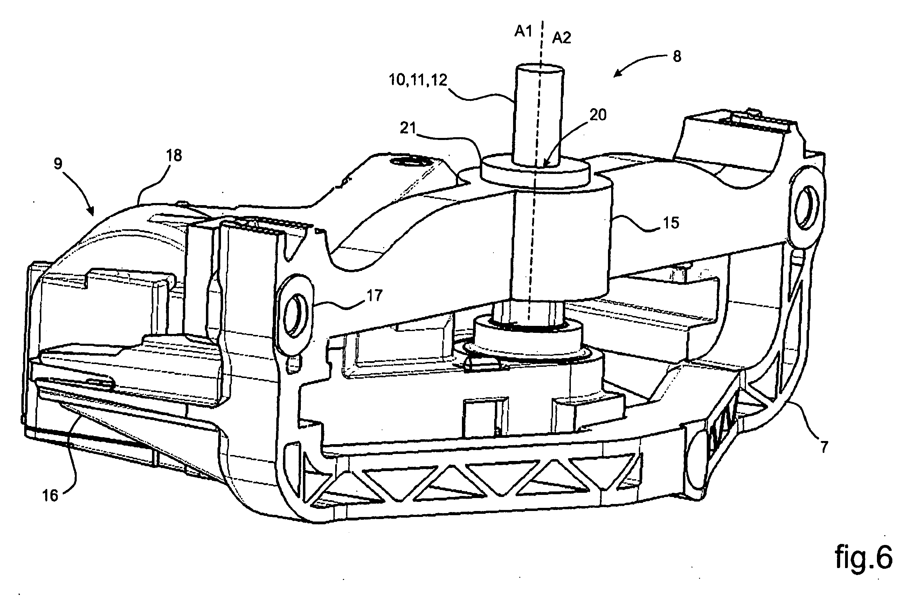

Le châssis 7 est formé d'une ossature qui est munie d'un socle 15 de soutien du module optique 1 par l'intermédiaire de son support 6. Cette ossature s'étend globalement dans un plan contenant l'axe de pivot A1 du module optique 1, et plus particulièrement aussi l'axe A2 du palier d'articulation. Cette ossature est par exemple agencée en platine, tel qu'illustré sur les fig.1 et fig.3, ou en armature rigide composée de poutres ou analogues reliées entre elles, tel qu'illustré sur les fig.2 et fig.6. Sur la fig.6 plus particulièrement, le châssis 7 est muni de moyens de réception 16 par clipage de l'actionneur 9, latéralement par rapport à l'extension de l'arbre de sortie 10, et de moyens de fixation 17 sur un boîtier du projecteur non représenté. L'actionneur 9 constitue un module rapportable sur le châssis 7, et intègre un organe moteur 18 qui est en relation avec l'arbre de sortie 10 par l'intermédiaire d'un système de transmission non représenté. L'arbre de l'organe moteur 18 de l'actionneur 9 est orienté suivant une direction différente de celle de l'arbre de sortie 10, ce qui permet de placer l'actionneur 9 latéralement sur le châssis 7 sans faire obstacle à l'exploitation de l'arbre de sortie 10 pour former à la fois l'organe d'entraînement 12 en prise sur le support 6 et l'organe d'articulation 11 du palier 8 apte à coopérer avec un organe d'articulation complémentaire 19 que comporte le support 6.

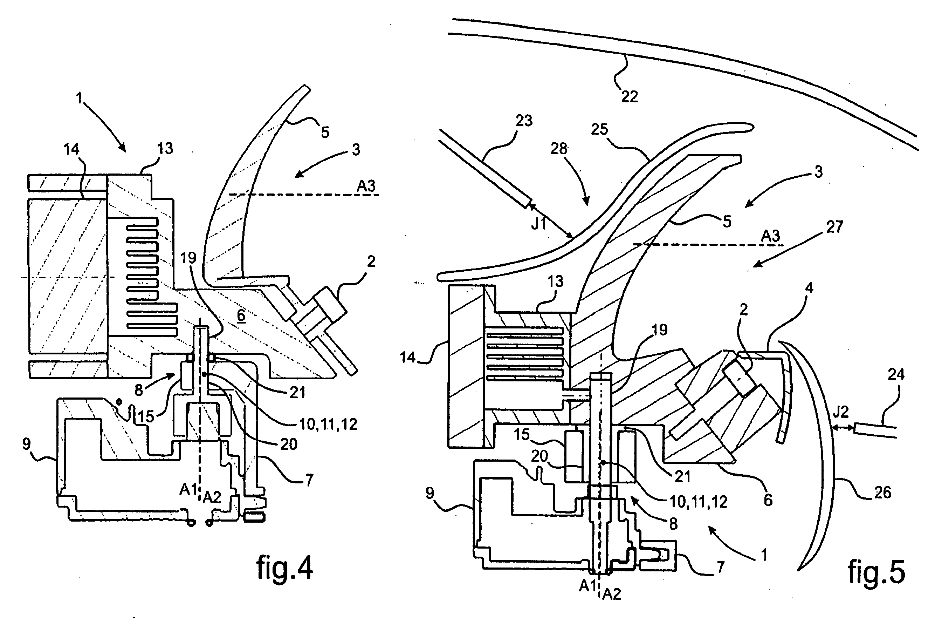

Sur la fig.5 plus particulièrement, l'organe d'articulation 11 peut être monté coulissant par rapport à un palier d'articulation 8. Le palier d'articulation 8 associe le socle 15 qui ménage une assise de soutien du support 6 et qui comporte un passage 20 pour l'arbre de sortie 10 de l'actionneur 9. L'arbre de sortie 10 est en prise sur le support 6 en étant emmanché d à l'intérieur d'un logement qui le reçoit et qui est constitutif de l'organe d'articulation complémentaire 19. Le guidage en articulation du support 6 est réalisé à partir de sa seule prise sur l'arbre de sortie 10 de l'actionneur 9. L'arbre de sortie 10 d'un actionneur 9 peut notamment avoir un jeu vertical, afin de faciliter le montage du dispositif et aussi permettre au palier 8 de reprendre naturellement les efforts liés au module optique 1. D'autres modalités de mise en relation mécanique entre le support et l'arbre de sortie sont envisageables, tel que par clavetage, par cannelage ou technique analogue.

Une pièce 21 de frottement axial est interposée entre le support 6 et le socle 15. Cette pièce 21 de frottement est par exemple constituée d'une butée à aiguilles ou à billes, tel qu'illustré sur la fig.4, ou d'une bague épaulée d'usure enfilée à l'intérieur du passage 20 que comporte le socle 6 tel qu'illustré sur la fig.5.

Sur la fig.5, le projecteur est muni d'un jeu de masques pour faire obstacle à un accès visuel aux organes réputés inesthétiques du projecteur, tels que notamment le module optique 1 à l'exception du réflecteur terminal 5 constitutif du système optique 3. Il est plus particulièrement recherché de former un tel obstacle visuel vers l'intérieur du projecteur à travers une paroi transparente 22 que comporte le projecteur pour la sortie du faisceau lumineux. Le jeu de masques associe des masques fixes 23,24 portés par le boîtier du projecteur et des masques mobiles 25,26 portés par le module optique 1. L'agencement entre eux de ces masques permet de ménager une fenêtre 27 à travers laquelle le faisceau lumineux est apte à être renvoyé vers la paroi transparente 22 pour sa sortie hors du projecteur.

La mobilité en pivotement du module optique 1 est souhaitée la plus ample possible, avec pour conséquence d'avoir à ménager des jeux J1 et J2 suffisants entre les masques fixes 23,24 et les masques mobiles 25,26. Ces jeux J1 et J2 constituent des interstices qui affectent l'esthétisme du projecteur. En outre, l'aspect extérieur visible du module optique 1 est conditionné à l'aspect extérieur combinant les masques mobiles 25,26 et le réflecteur terminal 5. Le dégagement de la zone supérieure du module optique 1 permet d'agencer librement un masque supérieur mobile 25 enveloppant le module optique 1. Cette liberté permet notamment de ménager un recoin arrière 28 sur le masque supérieur mobile 25, vers l'intérieur duquel est placé le bord d'un masque supérieur fixe 23. Le jeu J1 ménagé entre le masque supérieur mobile 25 et le masque supérieur fixe 23 est apte à être invisible depuis l'extérieur du projecteur à travers la paroi transparente 22. Un masque inférieur mobile 26 est installé sur le module optique 1, en s'étendant suivant une direction sensiblement orthogonale à l'axe optique A3 du faisceau lumineux. Ce masque inférieur mobile 26 est légèrement galbé et est placé à l'avant du module optique 1, en interposition entre ce dernier et la paroi transparente 22, pour cacher la base du support 6 et éventuellement le socle 15. Le masque inférieur mobile 26 coopère avec un masque inférieur fixe 24 porté par le boîtier du projecteur. Ce masque inférieur fixe 24 est sensiblement orienté parallèlement à l'axe optique A3 du faisceau lumineux, en étant légèrement incliné pour éviter une réflexion indésirable de la lumière produite par le module optique 1. Le jeu J2 entre le masque inférieur fixe 24 et le masque inférieur mobile 26 est susceptible d'être peu important compte tenu des conformations et orientations respectives de ces masques par rapport à l'orientation de l'axe de pivot A1 du module optique 1. Notamment, le masque inférieur mobile 26 est de conformation courbe dont le centre de courbure est situé sur l'axe de pivot A. Le bord de la fenêtre que comporte le masque inférieur fixe 24 est de conformation analogue à la courbure du masque inférieur mobile 26. Le jeu J2 n'est que peu ou pas perceptible par un observateur à travers la paroi transparente 22, même si celle-ci est fortement galbée par rapport au plan de repos du véhicule au sol.

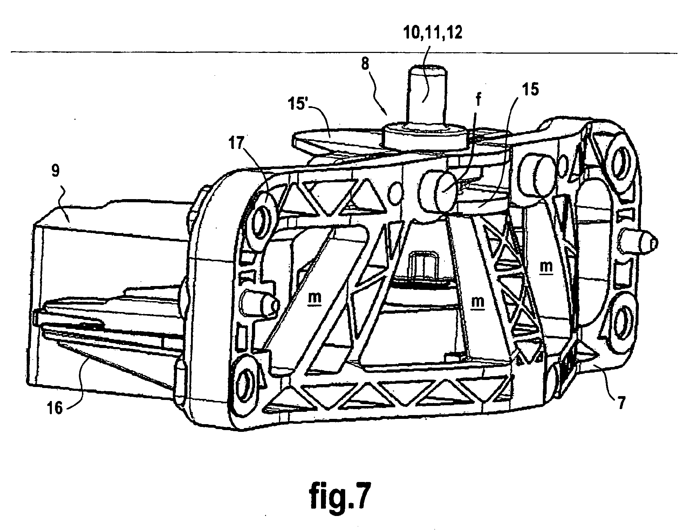

La figure 7 représente une vue en perspective d'une variante du châssis selon la figure 6 : les mêmes références sont utilisées. Cette variante ajoute, notamment, trois montants m, deux latéraux et un central, au châssis 7 afin d'en améliorer la rigidité mécanique. Le socle 15 se décompose en deux parties, 15 et 15', un moyen de fixation de type vis f est prévu pour fixer la pièce 15' au châssis 7.

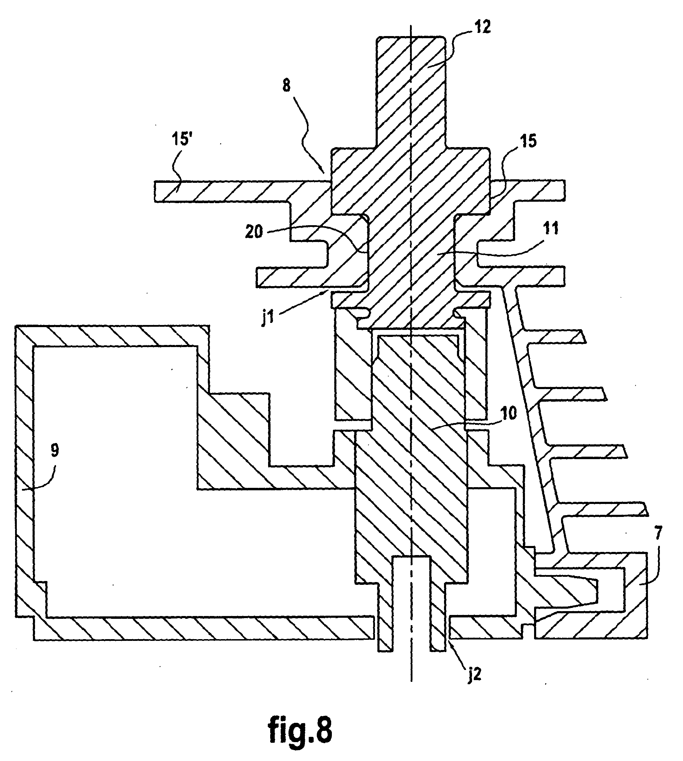

La figure 8 est une vue en section des éléments représentés à la figure 7 : l'axe 10 est l'axe de l'actionneur 9, qui permet la rotation du palier. L'axe 12 transmet le mouvement de rotation au support 6. Tout le poids du module repose sur le socle 15,15', dans sa zone de contact avec l'axe 12. Un jeu vertical j1 est visible sur la figure entre le socle et l'arbre 12. Un autre jeu j2 est prévu au niveau de l'actionneur 9 et de son axe 10.

## Revendications

1. Projecteur pour véhicule automobile équipé d'un module optique (1) comprenant un support (6) porteur d'une source lumineuse (2) et d'un système optique (3) pour l'émission d'un faisceau lumineux, le module optique (1) étant monté mobile sur le projecteur autour d'un axe de pivot (A1) par l'intermédiaire de moyens de mobilité qui associent des moyens de montage pivotant du support (6) sur un châssis (7) du projecteur utilisant un actionneur (9) en relation avec au moins un organe d'entraînement (10,11,12) en prise sur le support (6), **caractérisé en ce que** les moyens de montage pivotant du support (6) comprennent un palier unique d'articulation (8.15,15', 20,21):
- situé en dessous et supportant le module optique (1),
- reprenant les efforts, notamment axiaux et radiaux, dus au module optique (1) et ainsi séparant le ou les organes d'entraînement (10,11,12) des chaînes d'efforts, le paliers (8) supportant le poids du module (1), et **en ce que** le châssis (7) est formé d'une ossature qui est munie d'un socle (15) de soutien du module optique (1) par l'intermédiaire de son support (6), cette ossature s'étendant globalement dans un plan contenant l'axe de pivot (A1) du module optique (1).

2. Projecteur selon la revendication précédente, **caractérisé en ce que** le module optique (1) est disposé au dessus, notamment en porte-à-faux ou en surplomb, du châssis (7).

3. Projecteur selon l'une quelconque des revendications précédentes, **caractérisé en ce que** l'axe d'articulation (A2) du palier (8) est coaxial ou excentré par rapport à l'axe de pivot (A1) du module optique (1).

4. Projecteur selon l'une quelconque des revendications précédentes, **caractérisé en ce que** le socle (15) comporte un passage (20) pour l'organe d'entraînement (12) qui est coaxial à l'axe (A2) du palier d'articulation (8) dont il est constitutif et qui est manoeuvrable en rotation sur lui-même par l'actionneur (9).

5. Projecteur selon l'une quelconque des revendications précédentes, **caractérisé en ce que** l'organe d'entraînement (12) comprend un arbre de sortie (10) de l'actionneur (9).

6. Projecteur selon l'une quelconque des revendications 1 à 5, **caractérisé en ce que** l'organe d'entraînement (12) comprend un organe cranté qui coopère avec les ailettes d'un échangeur thermique (13) que comporte le module optique (1).

7. Projecteur selon l'une quelconque des revendications précédentes, **caractérisé en ce que** la source lumineuse (2) est choisie parmi au moins une diode électroluminescente (LED), une lampe à décharge dite xénon, et une lampe halogène.

8. Projecteur selon la revendication précédente, **caractérisé en ce que** la source lumineuse (2) comprend au moins une diode électroluminescente (LED), et **en ce que** le support (6) est constitué d'un corps porteur :
- dans sa zone avant d'au moins une diode électroluminescente constitutive de la source lumineuse (2), et d'un élément monobloc constitutif du système optique (3) affecté à la diode électroluminescente (LED),
- dans une quelconque autre de ses zones, de moyens de refroidissement (13,14) de la chaleur produite par la source lumineuse (2).

9. Projecteur selon l'une quelconque des revendications précédentes, **caractérisé en ce qu'**une pièce (21) de frottement axial est interposée entre le support (6) et le socle (15).

10. Projecteur selon l'une quelconque des revendications précédentes, **caractérisé en ce qu'**au moins un masque mobile est porté par le module optique (1) avec lequel il se déplace.

11. Projecteur selon la revendication précédente, **caractérisé en ce que** le masque mobile comprend un masque supérieur mobile (25) qui ménage un recoin arrière (28) de réception du bord d'un masque supérieur fixe (23) porté par un boîtier du projecteur.

12. Projecteur selon l'une quelconque des revendications 11 et 12, **caractérisé en ce que** le masque mobile comprend un masque inférieur mobile (26) qui s'étend sensiblement orthogonalement à l'axe optique (A3) du faisceau lumineux, et qui coopère de préférence avec un masque inférieur fixe (24) porté par un boîtier du projecteur et orienté sensiblement orthogonalement au masque inférieur mobile (26).

13. Projecteur selon l'une quelconque des revendications précédentes, **caractérisé en ce que** le projecteur est muni d'un module optique (1) monté pivotant sur le socle (15) selon un débattement angulaire apte à procurer à partir de ce même module optique (1) la fonction « code classique » et la fonction « code virage »

14. Projecteur selon l'une quelconque des revendications précédentes, **caractérisé en ce que** le module optique (1) est porté par un châssis intermédiaire lui-même porté par un châssis commun à plusieurs modules optiques, et **en ce qu'**il comporte un moyen de correction dédié, notamment un correcteur dynamique.

## Claims

1. Head light for a motor vehicle equipped with an optical module (1) comprising a support (6) which supports a source of light (2), and with an optical system (3) for emission of a light beam, the optical module (1) being fitted such as to be mobile on the headlight around an axis of pivoting (A1) by means of mobility means which associate means for pivoting fitting of the support (6) on a plate (7) of the headlight which uses an actuator (9) in relation to at least one drive unit (10, 11, 12) which is engaged on the support (6), **characterised in that** the means for pivoting fitting of the support (6) comprise a single articulation bearing (8, 15, 15', 20, 21) which:
- is situated below the optical module (1) and supports it;
- absorbs the forces, in particular the axial and radial forces caused by the optical module (1), and thus separates the drive unit(s) (10, 11, 12) from the chains of forces, with the bearing (8) supporting the weight of the module(1), and **in that** the plate (7) is formed by a frame which is provided with a base (15) to support the optical module (1) by means of its support (6), this frame extending globally on a plane which contains the axis of pivoting (A1) of the optical module (1).

2. Headlight according to the preceding claim, **characterised in that** the optical module (1) is disposed above, and in particular cantilevered on, or overhanging from the plate (7).

3. Headlight according to either of the preceding claims, **characterised in that** the axis of articulation (A2) of the bearing (8) is coaxial or eccentric relative to the axis of pivoting (A1) of the optical module (1).

4. Headlight according to any one of the preceding claims, **characterised in that** the base (15) comprises a passage (20) for the drive unit (12) which is coaxial to the axis (A2) of the articulation bearing (8) of which it is constituent, and which is manoeuvrable in rotation around itself by means of the actuator (9).

5. Headlight according to any one of the preceding claims, **characterised in that** the drive units (12) comprises an output shaft (10) for the actuator (9).

6. Headlight according to any one of claims 1 to 5, **characterised in that that** the drive unit (12) comprises a notched unit which co-operates with the fins of a heat exchanger (13) which the optical module (1) comprises.

7. Headlight according to any one of the preceding claims, **characterised in that** the source of light (2) is selected from amongst at least a light-emitting diode (LED), a so-called xenon discharge lamp, and a halogen lamp.

8. Headlight according to the preceding claim, **characterised in that** the source of light (2) comprises at least one light-emitting diode (LED), and **in that** the support (6) is constituted by a support body:
- in its front area by at least one light-emitting diode which constitutes the source of light (2), and an element in a single piece which constitutes the optical system (3) allocated to the light-emitting diode (LED);
- in any one of its other areas by means (13, 14) for cooling the heat produced by the source of light (2).

9. Headlight according to any one of the preceding claims, **characterised in that** an axial friction part (21) is interposed between the support (6) and the base (15).

10. Headlight according to any one of the preceding claims, **characterised in that** at least one mobile shield is supported by the optical module (1) together with which it is displaced.

11. Headlight according to the preceding claim, **characterised in that** the mobile shield comprises a mobile upper shield (25) which has a rear recess (28) for receipt of the edge of a fixed upper shield (23) which is supported by a housing of the headlight.

12. Headlight according to either of claims 11 and 12, **characterised in that** the mobile shield comprises a mobile lower shield (26) which extends substantially at right-angles to the optical axis (A3) of the light beam, and which preferably co-operates with a fixed lower shield (24) which is supported by a housing of the headlight, and is oriented substantially at right-angles to the mobile lower shield (26).

13. Headlight according to any one of the preceding claims, **characterised in that** the headlight is provided with an optical module (1) which is fitted such as to pivot on the base (15) with angular clearance which, from this same optical module (1), can provide the "conventional beam" function and the "bending beam" function.

14. Headlight according to any one of the preceding claims, **characterised in that** the optical module (1) is supported by an intermediate plate, which itself is supported by a plate which is common to a plurality of optical modules, and it that it comprises a dedicated correction means, and in particular a dynamic corrector.

## Patentansprüche

1. Kraftfahrzeugscheinwerfer, ausgestattet mit einem Optikmodul (1), das eine Halterung (6) umfasst, die eine Lichtquelle (2) und ein optisches System (3) zur Abgabe eines Lichtbündels trägt, wobei das Optikmodul (1) auf dem Scheinwerfer mithilfe von Verschiebemitteln um eine Schwenkachse (A1) beweglich montiert ist, die schwenkbare Montagemittel der Halterung (6) auf einem Rahmen (7) des Scheinwerfers unter Verwendung eines Stellelements (9) in Verbindung mit wenigstens einem Antriebsorgan (10, 11, 12) in Eingriff mit der Halterung (6) vereinigen,
**dadurch gekennzeichnet, dass** die schwenkbaren Montagemittel der Halterung (6) ein einziges Schwenklager (8, 15, 15', 20, 21) umfassen, das:
- unter dem Optikmodul (1) angeordnet ist und dieses trägt,
- die durch das Optikmodul (1) bedingten, insbesondere axialen und radialen Kräfte aufnimmt und das bzw. die Antriebsorgane (10, 11, 12) von den Kräfteketten trennt, wobei das Lager (8) das Gewicht des Moduls (1) trägt,
und dass der Rahmen (7) von einer Tragkonstruktion gebildet ist, die mit einem Sockel (15) zum Abstützen des Optikmoduls (1) mithilfe seiner Halterung (6) versehen ist, wobei sich die Tragkonstruktion allgemein in einer Ebene erstreckt, die die Schwenkachse (A1) des Optikmoduls (1) enthält.

2. Scheinwerfer nach dem vorhergehenden Anspruch,
**dadurch gekennzeichnet, dass** das Optikmodul (1) über dem Rahmen (7), insbesondere vorkragend oder vorspringend, angeordnet ist.

3. Scheinwerfer nach einem der vorhergehenden Ansprüche,
**dadurch gekennzeichnet, dass** die Drehachse (A2) des Lagers (8) bezüglich der Schwenkachse (A1) des Optikmoduls (1) koaxial oder exzentrisch ist.

4. Scheinwerfer nach einem der vorhergehenden Ansprüche,
**dadurch gekennzeichnet, dass** der Sockel (15) einen Durchlass (20) für das Antriebsorgan (12) aufweist, das zur Achse (A2) des Schwenklagers (8) koaxial ist, zu dessen Bestandteil es gehört, und das durch das Stellelement (9) um sich selbst drehend betätigbar ist.

5. Scheinwerfer nach einem der vorhergehenden Ansprüche,
**dadurch gekennzeichnet, dass** das Antriebsorgan (12) eine Abtriebswelle (10) des Stellelements (9) umfasst.

6. Scheinwerfer nach einem der Ansprüche 1 bis 5,
**dadurch gekennzeichnet, dass** das Antriebsorgan (12) ein gezahntes Element umfasst, das mit den Rippen eines Wärmetauschers (13) zusammenwirkt, den das Optikmodul (1) aufweist.

7. Scheinwerfer nach einem der vorhergehenden Ansprüche,
**dadurch gekennzeichnet, dass** die Lichtquelle (2) aus wenigstens einer Leuchtdiode (LED), einer als Xenonlampe bezeichneten Entladungslampe oder einer Halogenlampe ausgewählt ist.

8. Scheinwerfer nach dem vorhergehenden Anspruch,
**dadurch gekennzeichnet, dass** die Lichtquelle (2) wenigstens eine Leuchtdiode (LED) umfasst, und dass die Halterung (6) von einem Körper gebildet ist, der:
- in seinem vorderen Teil wenigstens eine die Lichtquelle (2) bildende Leuchtdiode und ein das optische System (3) bildendes einstückiges Element trägt, das der Leuchtdiode (LED) zugeordnet ist,
- sowie in einem beliebigen anderen Teil Mittel (13, 14) zum Abkühlen der durch die Lichtquelle (2) erzeugten Wärme.

9. Scheinwerfer nach einem der vorhergehenden Ansprüche,
**dadurch gekennzeichnet, dass** ein axiales Reibungsteil (21) zwischen die Halterung (6) und den Sockel (15) eingefügt ist.

10. Scheinwerfer nach einem der vorhergehenden Ansprüche,
**dadurch gekennzeichnet, dass** wenigstens eine bewegliche Blende von dem Optikmodul (1) getragen wird, mit dem diese sich bewegt.

11. Scheinwerfer nach dem vorhergehenden Anspruch,
**dadurch gekennzeichnet, dass** die bewegliche Blende eine bewegliche obere Blende (25) umfasst, die einen hinteren Winkel (28) bildet zur Aufnahme des Rands einer von einem Gehäuse des Scheinwerfers getragenen feststehenden oberen Blende (23).

12. Scheinwerfer nach einem der Ansprüche 11 oder 12,
**dadurch gekennzeichnet, dass** die bewegliche Blende eine bewegliche untere Blende (26) umfasst, die sich im Wesentlichen orthogonal zur optischen Achse (A3) des Lichtbündels erstreckt und die vorzugsweise mit einer von einem Gehäuse des Scheinwerfers getragenen feststehenden unteren Blende (24) zusammenwirkt, die zu der beweglichen unteren Blende (26) im Wesentlichen orthogonal ist

13. Scheinwerfer nach einem der vorhergehenden Ansprüche,
**dadurch gekennzeichnet, dass** der Scheinwerfer mit einem Optikmodul (1) versehen ist, das auf dem Sockel (15) mit einer Winkelverschiebbarkeit schwenkbar montiert ist, die ausgehend von ein und demselben Optikmodul (1) die Funktion "klassisches Abblendlicht" und die Funktion "Kurvenlicht" zu bewirken vermag.

14. Scheinwerfer nach einem der vorhergehenden Ansprüche,
**dadurch gekennzeichnet, dass** das Optikmodul (1) von einem Zwischenrahmen getragen ist, der seinerseits von einem Rahmen getragen ist, der mehreren Optikmodulen gemeinsam ist, und dass es ein speziell vorgesehenes Korrekturmittel umfasst, insbesondere einen dynamischen Leuchtweiteregler.
